# EUROPEAN PATENT APPLICATION

(11) **EP 2 339 382 A1**
(43) Date of publication of application: **29.06.2011**
(21) Application number: 09180290.0
(22) Date of filing: 22.12.2009
(51) Int. Cl.: G02B 6/00, A61C 19/00

(54) **A light guide for a dental light device and a method of making the light guide**

(71) Applicant: 3M Innovative Properties Company, Saint Paul, MN 55133-3427 (US)
(72) Inventor: The designation of the inventor has not yet been filed
(74) Representative: Hohmann, Arno

(57) **Abstract**

A light guide adapted for use with a dental light device ahs a reflector tube for receiving light from a light source of a light device and for guiding the light toward an end of the reflector tube. The light guide comprises further a reflector plate adjacent the end of the reflector tube. The reflector plate has a reflective face which is arranged inclined relative to the longitudinal axis. The light guide may facilitate handling of a light device in use, and may help minimizing costs.

## Description

### Field of the Invention

The invention relates to a dental light guide, and in particular to a light guide having an elongated reflector tube and a reflector plate inclined thereto. The invention further relates to a method of making a light guide for a dental light device.

### Background Art

Light curable materials are widely used in dentistry for the restoration of teeth. Such materials typically can be made to provide optical characteristics that resemble those of natural teeth. Therefore those materials are a favored alternative to less pleasant looking amalgam materials, for example.

Light-hardenable materials often include a polymerizable matrix material and filler materials including colorants, and may initially be generally soft or flowable so that they can be applied in a desired location and shape. For example, for restoration of a tooth the dental material may be filled into a tooth cavity and shaped so that the restored tooth resembles a natural tooth. Once the desired shape has been formed, the material may be cured by exposing it to light of a desired wavelength. The light typically activates photoinitiators in the dental material that cause the matrix material to polymerize.

The use of dental materials that are curable by blue light of a wavelength of between about 450 and 500 nm has become common in dentistry. Accordingly, light-emitting devices used for curing such dental materials typically emit light at such wavelengths. Such light-emitting device, for example, is available from 3M ESPE, Germany, under the trade designation Elipar^{™} Freelight 2 LED Curing Light.

US 5,147,204 discloses a light emitting apparatus for curing photocurable dental material. The apparatus includes a handpiece having a housing, a depending handle and a detachable light guide. The light guide is received in a head connected to the housing. Rotational movement of the head relative to the housing also rotatably moves the light guide so that the guide may be turned by the same hand of the user that is grasping the handle. Additionally, a pivotal connection between the housing and the handle permits limited pivotal adjustment of the angle of the housing relative to the handle for improved manipulation and user comfort.

US 6,749,427 discloses a light device having a light guide that is manufactured as a tube of post-formed multilayer optical film. The tubular light guide is curved and tapers along its length.

Although there are a variety of light devices on the market there is still a desire to provide a device that is relatively convenient in handling. Further such a device is desirably inexpensive. There is also a desire to provide a device which can be used at a relatively high level of hygiene.

### Summary of the Invention

In one aspect the invention relates to a light guide which is adapted for use with a dental light device.

Such a dental light device may have a light source which provides light that is suitable to cause a light-hardenable dental material to harden. The light source may for example provide blue light, for example having a wavelength of between about 450 nm and 500 nm. Such light may for example be provided by a LED or halogen lamp. The dental light device may have a battery powered handpiece which can be placed in a charger device for recharging the battery. The device therefore may be a generally cordless device. Further the device may have an actuator, for example a push button, for switching the device on and optionally for switching the device off. The device may have at least one further actuator allowing a user for selecting a certain operation mode of the device. An operation mode may for example comprise an automatic operation of the device over a predetermined time, a predetermined intensity, a predetermined wavelength, or combinations thereof. The device preferably has an interface for receiving a light guide, for example the light guide of the invention.

The light guide according to the invention has a reflector tube that extends generally along a longitudinal axis between a first end and a second end. Further the reflector tube is preferably adapted for receiving light from a light source of a light device at the first end and for guiding the light toward the second end. The light guide further comprises a reflector plate adjacent the second end. The reflector plate has a reflective face which faces (preferably the second end of) the reflector tube and is arranged inclined relative to the longitudinal axis.

The invention is advantageous in that it may allow for a relatively simple design of a light guide. Therefore the invention may help minimizing costs of a light device using such a light guide. Further the light guide may be relatively light weight and thus may provide for a relatively convenient handling of the device. The invention may also be advantageous in that it may allow a relatively compact design of the light guide. In particular the light guide because it may extend generally straight which may be advantageous over a curved light guide when used in narrow places, for example in a patient's mouth. The light guide of the invention may further provide for a relatively low thermal conduction. Thus the light guide may be advantageous in that it stays relatively cool at an end opposite of an end receiving light from a light source.

In one embodiment the reflector tube is adapted to emit the light guided from the first toward the second end from the reflector tube. For example the light may be emitted to an outside of the reflector tube. In that case the reflector plate is arranged outside the reflector tube. The reflector plate is preferably arranged at the device such that a majority of the light emitted from the reflector tube at the second end impinges the reflector and is deflected directly out of the device.

In one embodiment the reflector tube exhibits a reflective characteristic at least inwardly. For example the reflector tube may have an inward reflective face. The reflector tube therefore preferably has an inner reflective face. Light which is emitted into the reflector tube in a direction non-parallel to the longitudinal axis may thus be deflected as it impinges an inner wall of the reflector tube. The light impinging the wall at an angle different from 90 degrees may thus bounce between opposing wall sides as it passes the tube. Thus the reflector tube may be adapted to guide the light along the length of the tube. A "reflective face" for the purpose of this invention may be formed by a wall as a whole and not only by a surface of that wall. For example the wall may comprise partially reflective layers which together provide for the reflective characteristic.

In another embodiment the reflector plate is adapted to be reflective at least at the reflector face that faces the reflector tube.

The reflective characteristic of the reflector plate and/or of the reflector tube may be provided by a multilayer optical film. Further the reflective characteristic may be provided by a metal coating or a metal layer. Therefore the reflective characteristic of the reflector plate and/or of the reflector tube is preferably provided by one or more reflective surfaces, a stack of at least two layers that in combination provide for a reflective characteristic, or a combination thereof. The reflective characteristic may further be provided due to total reflection between a material and the environment (for example air) the material is located in, for example a material of the reflector tube and/or the reflector plate.

The multilayer optical film as it may be used with the present invention may have at least two contiguous layers of generally transparent materials that have different refractive indices. The layers are preferably made of plastic materials. At least one of these materials preferably is a birefringent plastic material. A multilayer optical film as it may be used for the reflector tube and/or the reflector plate may form a stack of layers that in combination provide for a reflective characteristic.

In one embodiment the reflector tube is formed by the multilayer optical film. The reflector tube may further be formed of a transparent glass and/or plastic material. Further the reflector tube may comprise (or be formed of) glass fibers that are oriented substantially in a direction along the longitudinal axis.

In one embodiment the reflector tube has an outer coating which provides for a reflective characteristic inwardly. Such a coating may extend at least partially or entirely along the length of the tube. Thus at least some of the light emitted into the reflector tube may be reflected inwardly as it impinges the inside of the coating. Further in a particular embodiment the reflector tube has a substantially transparent inner surface, for example may not have an inward reflective coating, but only the outer reflective coating. Thus light impinging the inner surface at a suitable angle may be reflected inwardly due to total reflection, and light at other angles may pass the inner surface and may be reflected by the outer coating. This may help maximizing the transmission rate (= light emitted from the light tube relative to the light emitted into the reflector tube) of the light guide.

In one embodiment the light guide comprises a housing. The reflector tube and/or the reflector plate may be accommodated replaceably relative to the housing. For example the reflector tube and the reflector plate may in combination form a reflector kit which may be accommodated replaceably inside or outside the housing. A reflector kit arranged on the housing may prevent the housing from getting in contact with undesired substances, for example during use in a patient's mouth. Therefore the housing may not need to be disinfected for the next use in another patient's mouth. The light guide may be prepared for the next use by just replacing the reflector kit by a fresh one. Thus disinfection of the reflector kit may be also saved in case the reflector kit is disposable. This may reduce efforts for disinfection, or may make disinfection of the light guide unnecessary. Further a reflector kit arranged within the housing may be prevented by the housing from getting in contact with undesired substances. Such a reflector kit may provide for excellent optical or reflective characteristics, but may comprise a material that is affected when exposed to such disinfectants. On the other hand the housing may be made of a relatively durable transparent material which is resistant to certain disinfectants, like for example made of glass or a certain plastic material. Therefore the reflector kit may be removed from the housing during disinfecting the housing. This may for example allow for reusing a reflector kit which is sensitive to certain disinfectants without the need for disinfection.

In one embodiment the reflector tube has a hollow profile perpendicular to the longitudinal axis. For example the reflector tube may be ring shaped. The reflector tube may have a profile which comprises a generally circular shape, for example may have generally concentric and generally cylindrical outer and inner surfaces, for example. Further the profile may comprise a polygonal shape, like a triangular shape, a rectangular shape, or a hexagonal shape for example. The skilled person will appreciate that the profile may comprise combinations of similar or different shapes that arranged concentrically or eccentrically to provide a suitable ring shaped reflector tube.

In one embodiment the reflector tube is tapered over at least part of its length. For example the reflector tube may reduce or widen in its inner cross-section toward the second end. Thereby the transmission rate of the reflector tube may be determined, for example increased or reduced. For example a reflector tube reducing in its inner cross-section toward the second end may also reduce the transmission rate. This may allow for hardening a dental material at a reduced speed. Such a light guide may for example be used to only increase the viscosity of a dental material so that it can be further shaped until it is finally hardened. On the other hand a reflector tube widening in its inner cross-section toward the second end may provide for a higher transmission rate allowing for more rapidly hardening a dental material.

In another embodiment the light guide comprises an opaque surface covering at least part of one or both of the reflector tube and the reflector plate. This may prevent light from exiting the light guide at undesired areas. Such an opaque layer may comprise a pigmented color or a metal for example.

In one embodiment the reflector tube is closed at least at the second end. Preferably the closure is a generally transparent. The closure may in a certain embodiment further comprise a prism, or a lens. Thus light may for example be deflected and/or focused when exiting the reflector tube.

In a further embodiment reflective face of the reflector plate is generally flat. The reflective face may be generally even. Further the reflective face may have a convex shape, in particular a spherical or parabolic shape. Therefore the reflector plate may be adapted to focus light received from the reflector tube. In particular such a spherical or parabolic reflector plate may provide for focusing light received from the reflector tube toward an area outside the device.

In one embodiment the reflective face is arranged at between about 30 degrees and about 60 degrees inclined relative the longitudinal axis, preferably at between about 30 degrees and about 45 degrees. The angles specified thereby are measured between a tangent of the reflective face and the longitudinal axis.

In another embodiment the reflector plate is formed by a prism. The prism may have a generally triangular cross-section in a direction generally perpendicular to the longitudinal axis. Therefore the prism may have three major outer surfaces. A first prism surface may face the second end of the reflector tube, and may be generally perpendicular with respect to the longitudinal axis. A second prism surface may be arranged generally parallel to the longitudinal axis, and a third prism surface may be inclined relative longitudinal axis. The third inclined prism surface may be generally transparent and provide for a reflective characteristic due to total reflection. However, the third inclined prism surface may also be provided with a reflective layer or coating. For example a metal coating of a multilayer optical film may be provided on the third prism surface. The first and second prism surfaces may in contrast be generally transparent.

In one embodiment the reflector tube and the reflector plate form one piece. For example one multilayer film may form the reflector tube and the reflector plate in one piece. Further a transparent material may form the reflector tube and the reflector plate, in particular the prism, in one piece. Therefore the light guide of the invention may be relatively easy to manufacture, and thus may be relatively inexpensive.

In one embodiment the light guide has a coupling part for coupling the light guide with a dental light device. The light guide may for example have a socket which can receive a plug of a light device. Further the light guide may have a plug which can be received in a socket of a light device. Thus the light guide may be replaceably attached at the light device.

Another embodiment comprises the light guide in combination with a dental light device. The invention may further provide for a kit comprising a light device and at least two light guides according to the invention. In one embodiment the kit comprises a plurality of light guides.

In one embodiment the light guide has a reflector rod that extends generally along a longitudinal axis between a first end and a second end. The reflector rod is preferably solid and thus differentiates from the reflector tube providing an inward hollow space. Further the reflector rod is preferably adapted for receiving light from a light source of a light device at the first end and for guiding the light toward the second end. The light guide further comprises a reflector plate adjacent the second end. The reflector plate has a reflective face which faces (preferably the second end of) the reflector rod but is arranged inclined relative to the longitudinal axis. This embodiment may be similar or identical to the embodiments otherwise mentioned in this specification as appropriate, except for the reflector tube being replaced by a reflector rod.

The reflector rod may be formed of a generally solid transparent body. Such a reflector rod may be made of glass or a generally transparent plastic material, for example. Other features of the light guide having the reflector tube may accordingly be used with this embodiment of a light guide having the reflector rod.

A further aspect of the invention relates to a method of forming a light guide according to the invention. The method comprises the steps of:
- providing a generally flat sheet of a reflective film, which comprises a first and a second portion;
- deforming the first portion to form a reflector tube extending along longitudinal axis;
- bending the second portion relative to the longitudinal axis such that the second portion is inclined with respect to the longitudinal axis.

The method may further comprise the step of deep drawing the second portion to provide the second portion with a generally spherical or general paraboloid shape.

Another aspect of the invention relates to a method of forming a light guide according to the invention. The method comprises the steps of:
- providing a tube;
- providing a prism or plate; and
- providing the tube, at least part of the plate, and optionally at least part of the prism with a coating by use of at least one of vapor deposition, sputtering and galvanic coating, for forming a reflector tube.

The tube may be coated at least inwardly, or may be coated only inwardly. The coating may comprise a metal, for example silver or aluminum.

A further aspect of the invention relates to a method of forming a light guide according to the invention. The method comprises the steps of:
- providing a metal tube; and
- providing a prism or plate.

The invention according to the specified methods may be advantageous for forming a relatively inexpensive light guide. Such a light guide preferably also helps in providing a relatively high convenience in use of a light device in combination with the light guide. This is because the light guide may be relatively light weight so that a manipulation of the device may be facilitated. Further disinfection may be facilitated, or made unnecessary for at least some embodiments of the present invention.

### Brief Description of the Figures

Fig. 1 is a perspective view of a light device having a light guide according to an embodiment of the invention;
Fig. 2 is a cross-sectional perspective view of a light guide according to an embodiment of the invention;
Fig. 3 is a top view of a precursor for forming a light guide according to an embodiment of the invention;
Fig. 4 is a perspective view of a light guide according to another embodiment of the invention;
Fig. 5 is a perspective view of a light guide according to a further embodiment of the invention;
Fig. 6 is a cross-sectional view of an alternative light guide according to an embodiment of the invention;
Fig. 7 is a perspective view of the light guide shown in Fig. 6;
Fig. 8 is a perspective view of a light guide according to a further embodiment of the invention; and
Fig. 9 is a perspective cross-sectional view of a light guide according to a still a further embodiment of the invention.

### Detailed Description of the Invention

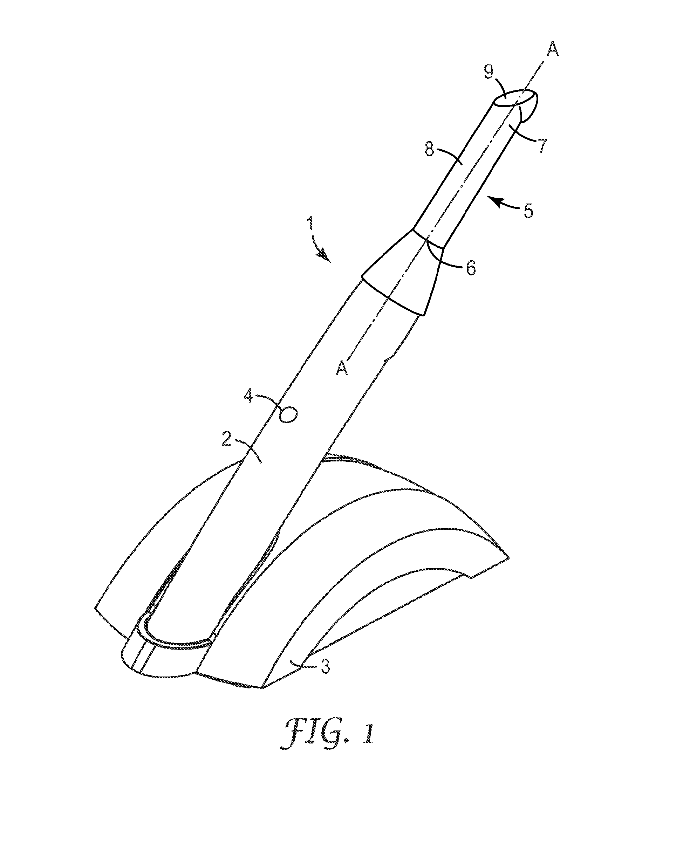

Fig. 1 shows a dental light device 1 as it may be used in dentistry, for example for providing light to a light hardenable material for initiating the material to harden. The light device 1 comprises a battery powered hand piece 2 and a charger device 3 for recharging the battery of the hand piece 2. The hand piece 2 may be removed from the charger device 3 for use and may then operate generally independently from the charger device 3. In particular there may not be any wired connection between the hand piece 2 and the charger device 3. The hand piece 2 may have a light source (not visible) that can be switched on and/or off by a switch 4. The hand piece 2 further comprises a light guide 5 which is adapted to guide light provided by the light source out of the device, for example toward a dental material. The light guide 5 has a reflector tube 8 with a first end 6 that is oriented toward the light source, and extends generally straight along a longitudinal axis A between the first end 6 and a second end 7. Thus light provided by the light source may be guided by the reflector tube 8 in a direction generally parallel to the longitudinal axis A from the first end 6 toward the second end 7. The light guide 5 further comprises a reflector plate 9 adjacent the second end 7 of the reflector tube 8. The reflector plate 9 is arranged relative to the reflector tube 8 such that light exiting the reflector tube 8 in a direction generally parallel to the longitudinal axis A is deflected generally laterally to that axis A. Preferably the reflector plate is arranged and adapted such that the deflected light can exit the hand piece directly, for example without being further deflected. Thus the efficiency of the light output of the device may be maximized relative to a device having curved light guide for deflecting the light.

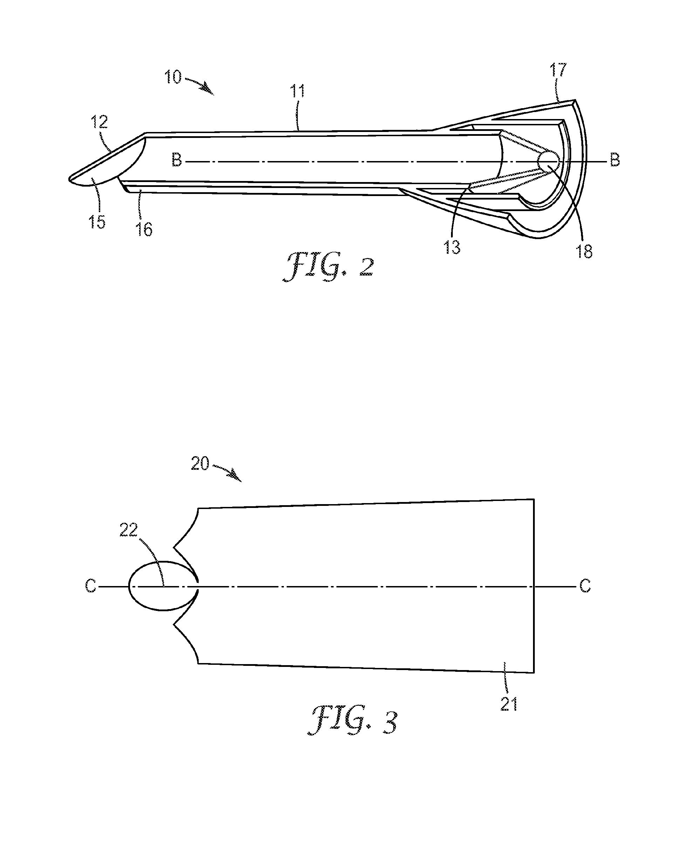

Fig. 2 is a cross-sectional view which illustrates a light guide 10 according to the invention in more detail. The light guide 10 has a reflector tube 11 and a reflector plate 12. The reflector tube 11 and a reflector plate 12 in the example form one piece. The reflector tube 11 is generally straight and has a first end 13 and a second end 16. In the example the reflector tube 11 has a generally uniform inner cross-section over its length, but may in another example be tapered inwardly, for example may continuously reduce or widen towards the second end 16. The reflector plate 12 is arranged at the second end 16 of the reflector tube 11 and intersecting a linear projection along the axis B of the inner cross-section of reflector tube 11. The reflector plate 12 has a generally flat face 15 which is oriented towards the second end of the reflector tube 11, but inclined with respect to the longitudinal axis B. The face 15 exhibits reflective properties, for example may be a reflective surface. Thus light exiting the reflector tube about parallel to the longitudinal axis B impinges the reflector plate 12 and is deflected generally laterally to the axis B. In the example the face 15 is illustrated as a generally even structure. However, in another example the face 15 may be convex, for example parabolic. Therefore light exiting the reflector tube about parallel to the longitudinal axis B maybe deflected and focused to a point or spot outside the device. Overall the face 15 is preferably generally flat, and in particular a cross-section of the face 15 in both of its dimensions may be flatter than an arc having a diameter that corresponds to an inner dimension (for example a diameter) of the reflector tube. The skilled person will recognize that the features described under the example shown in Fig.2 may also be used in combination with other embodiments of the invention. Some further embodiments are described in more detail in the following although other embodiments are possible without departing from the present invention.

The light guide 10 further has a coupling part 17 for mounting the light guide 10 to a light device (not shown in this Figure). The coupling part 17 in the example is tube shaped and therefore may form a receptacle for receiving a coupling part of the light device protruding from the device. The coupling part 17 and the reflector tube 11 may together form a hollow structure. Such a hollow structure allows for a light source 18 of the device to be arranged spaced from any solid structure of the light guide. Thus the light source 18 may emit light toward the hollow space in the light guide. Therefore as an advantage relative to a solid light guide the light guide 10 of the invention may be prevented from undue warming.

Fig. 3 shows a precursor 20 of at least part of a light guide. The precursor 20 has a first portion 21 and a second portion 22. The first portion 21 is generally rectangular. Thus the first portion may be formed to a cylinder about the longitudinal axis C. The second portion 22 is generally circular or oval, and may be bent in a direction generally laterally to the longitudinal axis C. Therefore the precursor 20 may be used to form a reflector tube and a reflector plate, for example similar to the reflector tube and the reflector plate shown in Fig. 2.

In the example illustrated in Fig. 3, the precursor may be made of a multi-layer optical film providing a reflective face. A variety of multi-layer optical films as they may be used with the present invention are for example described in US 5,882,774; US 6,101,032; US 6,157,490; US 6,207,260; US 6,179,948.

An exemplary multilayer optical film as it may be used with the present invention comprises a stack of at least two layers of generally transparent plastic materials having different refractive indices. The refractive index of a plastic material may be controlled within a certain range by stretching the material to a certain extent. Thus a layer of a material may be provided with a certain strain-induced refractive index by stretching.

Such a stack preferably provides the multilayer optical film with certain optical characteristics, in particular with reflectivity, and is therefore further referred to as the "optical stack". The optical stack may comprise at least one birefringent plastic material provided in a contiguous layer with at least one other material such that a certain strain-induced refractive index differential is provided between the layers. The optical stack preferably exhibits relatively low absorption of incident light, as well as high reflectivity for both off-axis and normal light rays. The reflective characteristics may generally hold whether the films are used for pure reflection or reflective polarization of light.

Other layers and/or materials may be provided in addition to the optical stack to form the multilayer film. For example, skin layers may be provided on the outside of the optical stack to improve the mechanical properties of the film or provide some other desired characteristic or characteristics including secondary optical effects such as retardation or polarization conversion, but the bulk of the reflective optical characteristics of the film is preferably determined by the configuration of the optical stack.

The optical stack of the multilayer optical film may include tens, hundreds or thousands of layers, and each layer may be made from any of a number of different materials, provided that at least one of the materials is birefringent. The materials may be chemically identical or similar materials with different physical properties, for example obtained from stretching to different extents. The optical stack may contain as many different materials as there are layers in the stack. For ease of manufacture, however, preferred optical stacks contain only a few different materials.

The boundaries between the materials within the stack may be abrupt or gradual. However an optic stack may comprise a larger number of layers having abrupt boundaries but with changing refractive indices between adjacent layers so that an almost continuously varying index is achieved throughout the thickness of the stack.

One preferred optical stack comprises low/high index pairs of layers, wherein each low/high index pair of layers has a combined optical thickness of 1/2 the center wavelength of the band it is designed to reflect at normal incidence. The optical thickness is the physical layer thickness multiplied by the index of refraction of the material in the layer for a given wavelength and polarization plane cross-section. Stacks of such layers are commonly referred to as quarterwave stacks. At least one of the materials may be birefringent, such that the index of refraction of the material along one direction is affected by stretching the material along that direction.

The optical stack can be stretched in two (typically) perpendicular in-plane directions to biaxially orient the birefringent material. Further the optical stack may be stretched in only one in-plane direction to uniaxially orient the birefringent material. By stretching the optical stack over a range of uniaxial to biaxial orientations, the stack may be provided with a range of reflectivities for differently oriented incident light. The optical stack can thus be made useful as reflective polarizers and/or mirrors.

Further instead or in addition to a multilayer optical film a reflective film, for example an aluminum film, or film having a reflective coating may be used.

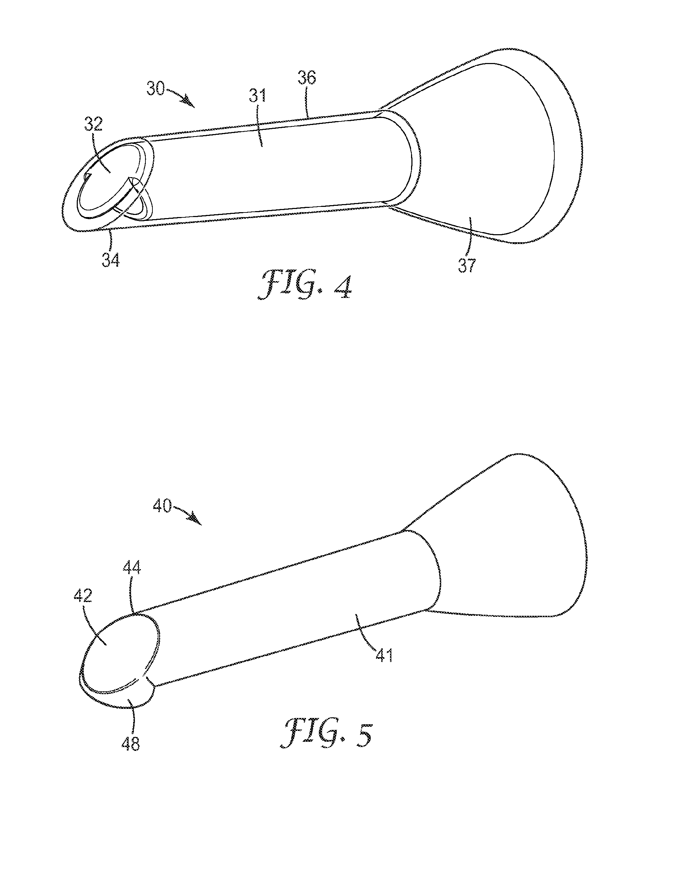

Fig. 4 shows a light guide 30 having a transparent housing 36 in which a reflector tube 31 and a reflector plate 32 are preferably removably disposed. The housing may be made of glass, for example. The light guide 30 may have a coupling part 37 which preferably allows the light guide 30 to be mounted to a light device. In the example the coupling part 37 may be part of the housing 36. The reflector tube 31 and the reflector plate 32 form one piece and may be formed of a multilayer optical film as illustrated for example in Fig. 3. The reflector tube 31 and the reflector plate 32 may thus be made of a plastic material, for example one that is substantially free of a metal coating or a metal layer. The reflector tube 31 and the reflector plate 32 may be replaceable in the housing 36 by another reflector tube and reflector plate. The housing may be closed at a second end 34 of the light guide 30. The light guide 30 of the example may be relatively inexpensive, but due to the housing may be resistant to a disinfection procedure in which chemicals and/or heat are used. The light guide 30, due to the reflector tube 31 and the reflector plate 32 being replaceable, may also be relative durable. Further the light guide 30 may have a lower weight than a solid (non tube like) light guide which may provide for a more convenient handling by a user.

Fig. 5 shows a further light guide 40 which may generally correspond to the light guide shown in Fig. 2 or 4, but further having an outlet tube 48 adjacent a second end 44 of the light guide. The light guide 40 in particular has a reflector tube 41 and a reflector plate 42. The reflector plate 42 is integrated in a transition between the reflector tube 41 and the outlet tube 48. Therefore the reflector tube 41 and the outlet tube 48 may form a closed tube with the reflector plate 42 integrated between. The reflector tube 41, the outlet tube 48, and the reflector plate 42 may in this example form one piece. For example the light guide 40 may be injection molded with at least the inner surfaces of the reflector tube 41, the outlet tube 48, and the reflector plate 42 being coated by a reflective coating. Further the light guide 40 may be formed of a multilayer optical film, for example folded and/or shaped by deformation. The skilled person will recognize that other configurations are possible without departing from the invention.

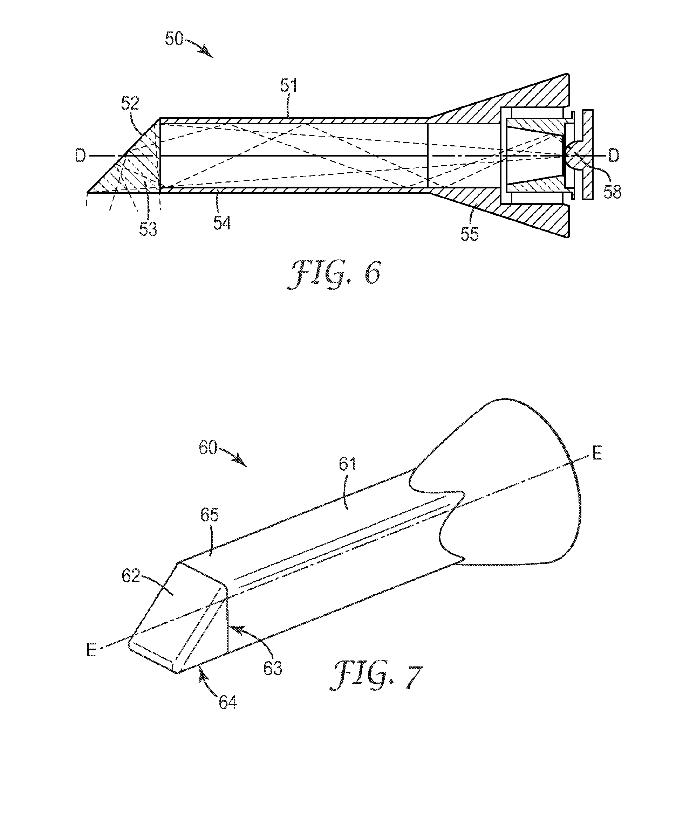

Fig. 6 shows a light guide 50 having a reflector tube 51 and a reflector plate 52. In this example the reflector plate 52 is formed by a surface of a prism 53. The prism 53 is arranged at a second end 54 of the reflector tube 51, and may close the reflector tube at the second end 54. Therefore substances may not penetrate the reflector tube, for example during use of the light guide in a patient's mouth. The surface forming the reflector plate 52 may be generally transparent so that light impinging the surface at certain angles may be deflected due to total reflection occurring between the material of the prism and the outside environment. The surface forming the reflector plate 52 may further by coated, for example by a reflective material so that a majority of light impinging the so formed mirror is deflected.

The light guide 50 shown extends generally along a longitudinal axis D, and is arranged with a first end 55 of the reflector tube 51 toward a light source 58. The reflector tube 51 adjacent the first end 55 has a funnel shaped section which reduces in cross-section toward the light source and opens in cross-section at an opposite side. The funnel shaped section may have a taper of between about 1 degree and about 20 degrees between opposing surfaces of the funnel shaped section. Therefore light provided by the light source may be guided at a relatively flat angle relative to the longitudinal axis D into the reflector tube. Thus the efficiency of the light guide may be maximized because the number of deflections until the light exits the reflector tube (and therefore losses of light intensity) may be minimized.

Fig. 7 shows a light guide 60 having a reflector tube 61 and a prism 62. The prism 62 has a generally triangular cross-section, a generally rectangular input surface 63 (not visible in detail) and a generally rectangular output surface 64 (also not visible in detail). A prism having such a shape may be relatively inexpensive to manufacture, and may be commercially available as a standardized component. In the example the reflector tube 61 has a rectangular cross-section perpendicularly to a longitudinal axis E of the light guide 60. Further the prism 62 closes the reflector tube 61 with the generally rectangular input surface 63 at a second end 65. Thus the light guide 60 may at an outside surface of the light guide provide for a smooth transition between the reflector tube and the prism 62. For example sharp edges and/or undercuts may be avoided which may make the use of the light guide in a patient's mouth relatively convenient. Further such a light guide may be relatively easy to clean and/or to disinfect due to the presence of edges and/or undercuts may be minimized. Further because the reflector tube 61 may be closed by the prism 62 substances may be prevented from penetrating the reflector tube from the second end.

Thus an inward contamination of the reflector tube during use of the light guide in a patient's mouth may be minimized. The example shown in Fig. 7 may comprise further features as mentioned in other examples herein as appropriate. In particular the prism may comprise or form a reflector plate as described in the example illustrated in Fig. 6.

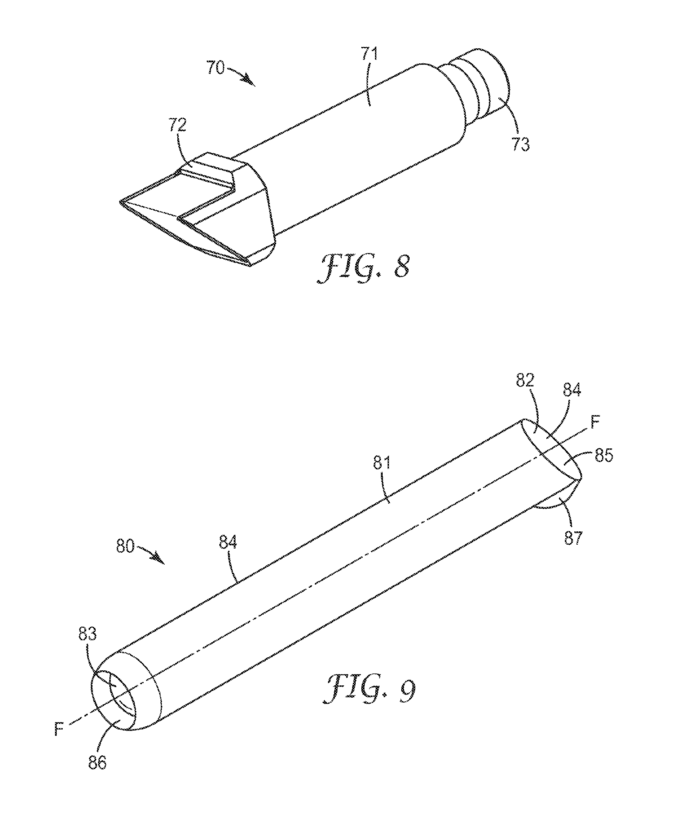

Fig. 8 shows a light guide 70 having a reflector tube 71 and a prism 72. The embodiment generally corresponds to the embodiment shown in Fig. 7. However the light guide 70 has a generally cylindrical reflector tube 71, and further a coupling end 73 which may close a first end of the reflector tube 71. Therefore the reflector tube 71 of the light guide 70 may be closed at both ends. Substances may thus be prevented from penetrating the reflector tube. A similar closure of the reflector tube may also be provided in the examples of Figs. 2, 4, 5, 6 and 7. The skilled person will recognize in other examples as disclosed in this specification the first end may also be closed.

Fig. 9 shows a solid light guide 80 having a generally linear light guiding section 81 along a longitudinal axis F, a prism 82 and a lens 83 for focusing light from outside the light guide into the guiding section 81. The lens 83 may provide for the light being emitted at relatively flat angles relative to the longitudinal axis F. Thus the number of deflections of the light within the light guide may be minimized and the efficiency of the light guide may be maximized. Further a linear light guiding section 81 which is adapted to guide the light based on total reflection at the outer surface light guiding section 81 may be maximized in efficiency because the amount of light impinging that outer surface at angles appropriate for total reflection may be maximized. The linear light guiding section 81, the prism 82 and the lens 83 may form one piece. Such a light guide may be made, for example casted or molded, of a glass or a plastic material. According to the invention the linear light guiding section 81 may also be a reflector tube providing an inward hollow space. In that case the reflection tube and the prism 82 may form one piece, and the lens 83 may form a separate piece. Further each of the reflection tube, the prism 82, and the lens 83 may form separate pieces. The skilled person will recognize further possibilities, like for example the reflection tube and the lens 83 may form one piece, and the prism 82 may form a separate piece.

The light guide 80 may have an outside reflective layer 84, for example a metal coating or a layer comprising a multilayer optical film. The reflective layer 84 may be arranged at least on a surface of the prism that forms a reflector plate 85, but may further be arranged at an outside surface of the light guiding section 81.

## Claims

1. A light guide adapted for use with a dental light device, the light guide having a reflector tube that extends generally along a longitudinal axis between a first end and a second end, the reflector tube being adapted for receiving light from a light source of a light device at the first end and for guiding the light toward the second end, wherein the light guide further comprises a reflector plate adjacent the second end, with the reflector plate having a reflective face which faces the reflector tube and is arranged inclined relative to the longitudinal axis.

2. The light guide of claim 1, in which at least one or both of the reflector tube and the reflector plate comprise(s) a multilayer optical film providing the reflector tube and/or the reflector plate with a reflective characteristic.

3. The light guide of claim 1 or 2, in which the light guide comprises a housing, wherein the reflector tube and/or the reflector plate is/are replaceably accommodated relative to the housing.

4. The light guide of any of the preceding claims, in which the reflector tube has a hollow profile perpendicular to the longitudinal axis.

5. The light guide of claim 4, wherein the profile comprises a generally circular or polygonal shape.

6. The light guide of any of the preceding claims, in which the light guide comprises an opaque surface covering at least part of one or both of the reflector tube and the reflector plate.

7. The light guide of any of the preceding claims, in which the reflector tube is closed at the second end by a transparent closure.

8. The light guide of any of the preceding claims, in which the reflective face of the reflector plate is generally flat.

9. The light guide of claim 8, in which the reflective face has a parabolic shape.

10. The light guide of claim 8 or 9, in which the reflective face is arranged between about 30 degrees and about 60 degrees inclined relative the longitudinal axis.

11. The light guide of any of the preceding claims, wherein the reflector plate is formed by a prism.

12. The light guide of any of the preceding claims, wherein the reflector tube and the reflector plate form one piece.

13. The light guide of any of the preceding claims, in combination with a dental light device in which the light source is a LED providing blue light.

14. A method of forming a light guide, comprising the steps of:
- providing a generally flat sheet of a reflective film, which comprises a first and a second portion;
- deforming the first portion to form a reflector tube extending along longitudinal axis; and
- bending the second portion relative to the longitudinal axis such that the second portion is inclined with respect to the longitudinal axis.

15. The method of claim 14, comprising the step of deep drawing the second portion to provide the second portion with a generally spherical or general paraboloid shape.
